# EUROPEAN PATENT APPLICATION

(11) **EP 4 775 820 A2**
(43) Date of publication of application: **15.07.2026**
(21) Application number: 26151129.9
(22) Date of filing: 09.01.2026
(51) Int. Cl.: F02C 7/06, F02C 7/12, F02C 7/32, F02C 7/36, F02K 3/06, F02K 5/00

(54) **ELECTRIC MACHINE AND ACCESSORY GEARBOX ARRANGEMENT FOR AIRCRAFT PROPULSION SYSTEM**

(30) Priority: 09.01.2025 US 202519015189
(71) Applicant: RTX Corporation, Farmington, CT 06032 (US)
(72) Inventor: YAZICI, Murat, Glastonbury, 06033 (US); CLARK, Thomas E., Wells, 04090 (US)
(74) Representative: Dehns

(57) **Abstract**

An aircraft assembly (20) is provided that includes a propulsor rotor, a turbine engine core (44), an inner case, a first gearbox (108A), a second gearbox (108B), a first electric machine (96A) and a second electric machine (96B). The turbine engine core (44) includes a first rotating structure (54A) and a second rotating structure (54B). The first gearbox (108A) is mounted with the inner case. The second gearbox (108B) is located remote from the inner case. The first electric machine (96A) is operatively coupled to the first rotating structure (54A) through the first gearbox (108A). The second electric machine (96B) is operatively coupled to the second rotating structure (54B) through the second gearbox (108B). The first electric machine (96A) may be configurable as a first electric motor and/or a first electric generator. In addition or alternatively, the second electric machine (96B) may be configurable as a second electric motor and/or a second electric generator.

## Description

### BACKGROUND OF THE DISCLOSURE

### 1. Technical Field

This disclosure relates generally to an aircraft powerplant and, more particularly, to an electric machine system for the aircraft powerplant.

### 2. Background Information

An aircraft propulsion system may include one or more electric machines. Various electric machine systems are known in the art. While these known electric machine systems have various benefits, there is still room in the art for improvement.

### SUMMARY OF THE DISCLOSURE

According to an aspect of the present disclosure, an assembly is provided for an aircraft. This assembly includes a propulsor rotor, a turbine engine core, an inner case, a first gearbox, a second gearbox, a first electric machine and a second electric machine. The turbine engine core is configured to drive rotation of the propulsor rotor about an axis. The turbine engine core includes a first rotating structure and a second rotating structure. The first rotating structure includes a first bladed rotor. The second rotating structure includes a second bladed rotor. The inner case houses the turbine engine core. The first gearbox is mounted with the inner case. The second gearbox is located remote from the inner case. The first electric machine is operatively coupled to the first rotating structure through the first gearbox. The second electric machine is operatively coupled to the second rotating structure through the second gearbox. The first electric machine is configurable as a first electric motor during a first motor mode of operation, and the first electric machine is configurable as a first electric generator during a first generator mode of operation. In addition or alternatively, the second electric machine is configurable as a second electric motor during a second motor mode of operation, and the second electric machine is configurable as a second electric generator during a second generator mode of operation.

According to another aspect of the present disclosure, another assembly is provided for an aircraft. This assembly includes a propulsor rotor, a turbine engine core, an inner housing structure, an outer housing structure, a first gearbox, a second gearbox, a first electric machine and a second electric machine. The turbine engine core is configured to drive rotation of the propulsor rotor about an axis. The turbine engine core includes a first rotating structure and a second rotating structure. The first rotating structure includes a first bladed rotor. The second rotating structure includes a second bladed rotor. The inner housing structure houses the turbine engine core. The outer housing structure houses the propulsor rotor and is located radially outboard of the inner housing structure. The first gearbox is located remote from the outer housing structure. The second gearbox is mounted with the outer housing structure. The first electric machine is operatively coupled to the first rotating structure through the first gearbox. The second electric machine is operatively coupled to the second rotating structure through the second gearbox. The first electric machine is configurable as a first electric motor during a first motor mode of operation, and the first electric machine is configurable as a first electric generator during a first generator mode of operation. In addition or alternatively, the second electric machine is configurable as a second electric motor during a second motor mode of operation, and the second electric machine is configurable as a second electric generator during a second generator mode of operation.

According to still another aspect of the present disclosure, another assembly is provided for an aircraft. This assembly includes a propulsor rotor, a turbine engine core, a first gearbox, a second gearbox, a first electric machine and a second electric machine. The turbine engine core is configured to drive rotation of the propulsor rotor about an axis. The turbine engine core includes a first rotating structure and a second rotating structure. The first rotating structure includes a first bladed rotor. The second rotating structure includes a second bladed rotor. The first gearbox is located a first radial distance from the axis. The second gearbox is located a second radial distance from the axis that is different than the first radial distance. The first electric machine includes a first electric machine rotor. The first gearbox is configured to transfer mechanical power between the first electric machine rotor and the first rotating structure. The second electric machine includes a second electric machine rotor. The second gearbox is configured to transfer mechanical power between the second electric machine rotor and the second rotating structure. The first electric machine and/or the second electric machine is configured as an electric motor-generator.

The assembly may also include a housing structure that houses and extends circumferentially about the turbine engine core. The first gearbox may be disposed within a compartment of the housing structure located radially outboard of the turbine engine core.

The assembly may also include a housing structure that houses and extends circumferentially about the propulsor rotor. The second gearbox may be disposed within a compartment of the housing structure located radially outboard of the propulsor rotor.

A difference between the first radial distance and the second radial distance may be greater than a radial height of the first gearbox and/or a radial height of the second gearbox.

The first gearbox may be dedicated to transferring the mechanical power between the first electric machine rotor and the first rotating structure. In addition or alternatively, the second gearbox may be dedicated to transferring the mechanical power between the second electric machine rotor and the second rotating structure.

The first gearbox may be mounted with the inner housing structure.

The first rotating structure may be operable to rotate independent of the second rotating structure. In addition or alternatively, the second rotating structure may be operable to rotate independent of the first rotating structure.

The second gearbox may be structurally and operably discrete from the first gearbox.

The assembly may also include an outer case housing the propulsor rotor and extending circumferentially about the inner case. The second gearbox may be mounted with the outer case.

The assembly may also include a first electric machine controller and/or a second electric machine controller. The first electric machine controller may be configured to control operation of the first electric machine. The first electric machine controller may be configured mounted with the outer case. The second electric machine controller may be configured to control operation of the second electric machine. The second electric machine controller may be mounted with the outer case.

The assembly may also include a first electric machine controller and/or a second electric machine controller. The first electric machine controller may be configured to control operation of the first electric machine. The first electric machine controller may be arranged within an inner compartment bordered by the inner case. The second electric machine controller may be configured to control operation of the second electric machine. The second electric machine controller may be arranged within an outer compartment bordered by the outer case.

The first gearbox may be circumferentially offset from the second gearbox about the axis.

The first gearbox may be circumferentially aligned with the second gearbox about the axis.

The assembly may also include a first fluid system and/or a second fluid system. The first fluid system may be configured to lubricate and/or cool the first gearbox. The second fluid system may be configured to lubricate and/or cool the second gearbox.

The turbine engine core may also include a compressor section, a combustor section, a turbine section and a flowpath extending through the compressor section, the combustor section and the turbine section from an inlet into the flowpath to an exhaust from the flowpath. The first bladed rotor may be a first turbine rotor within the turbine section. The second bladed rotor may be a second turbine rotor within the turbine section. The first turbine rotor may be located between the combustor section and the second turbine rotor along the flowpath.

The turbine engine core may also include a compressor section, a combustor section, a turbine section and a flowpath extending through the compressor section, the combustor section and the turbine section from an inlet into the flowpath to an exhaust from the flowpath. The first bladed rotor may be a first turbine rotor within the turbine section. The second bladed rotor may be a second turbine rotor within the turbine section. The second turbine rotor may be located between the combustor section and the first turbine rotor along the flowpath.

The first gearbox may be dedicated to transferring mechanical power between the first electric machine and the first rotating structure. In addition or alternatively, the second gearbox may be dedicated to transferring mechanical power between the second electric machine and the second rotating structure.

The assembly may also include a first accessory and/or a second accessory. The first accessory may be operatively coupled to the first rotating structure through the first gearbox. The second accessory may be operatively coupled to the second rotating structure through the second gearbox.

The assembly may also include an electrical system electrically coupled to the first electric machine and the second electric machine.

The assembly may also include an outer case housing the propulsor rotor and circumscribing the inner case. A first electric machine controller may be electrically coupled between the first electric machine and the electrical system, where the first electric machine controller may be mounted with the outer case. In addition or alternatively, a second electric machine controller may be electrically coupled between the second electric machine and the electrical system, where the second electric machine controller may be mounted with the outer case.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial side schematic illustration of an aircraft propulsion system with a ducted propulsor rotor.
FIG. 2 is a schematic illustration of a portion of the aircraft propulsion system with an electric machine system coupled to an electric accessory system and an aircraft electrical system.
FIG. 3 is a partial schematic illustration of the arrangement of FIG. 2 with multiple fluid systems.
FIGS. 4-7 are partial end view illustrations of an engine housing with various electric machine system arrangements.
FIG. 8 is a schematic illustration of an electric machine with a dedicated accessory gearbox.
FIG. 9 is a schematic illustration of an electric machine and engine accessories coupled to a common accessory gearbox.
FIG. 10 is a schematic illustration of electric machine controllers disposed with an inner housing structure for the aircraft propulsion system.
FIG. 11 is a schematic illustration of electric machine controllers and optionally a gearbox-electric machine arrangement disposed with an airframe structure.

### DETAILED DESCRIPTION

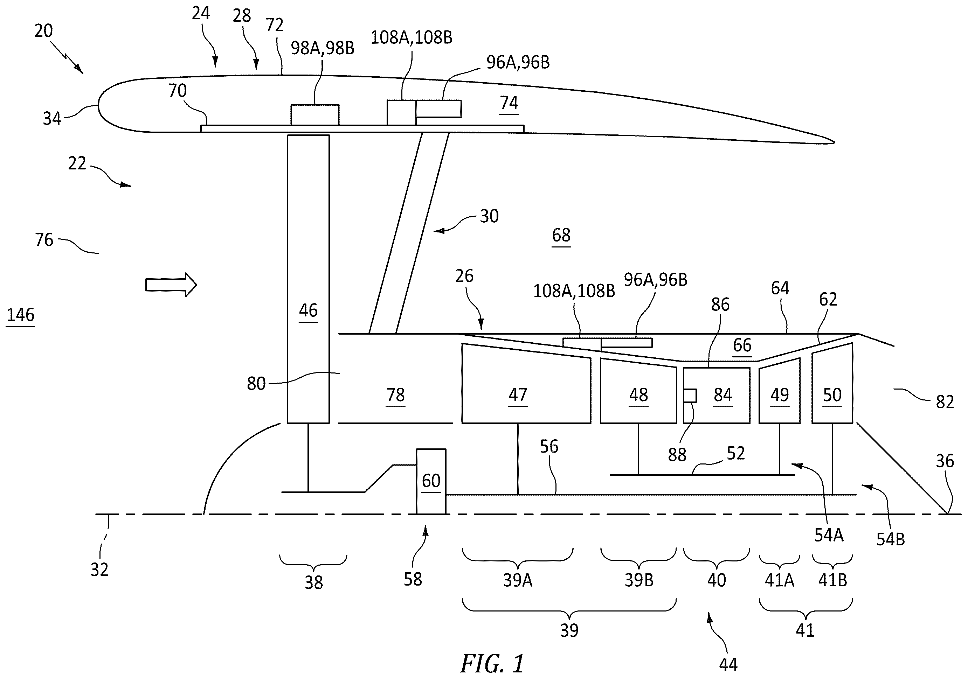

FIG. 1 illustrates a propulsion system 20 for an aircraft. The aircraft may be an airplane, a rotorcraft (e.g., a helicopter), a drone (e.g., an unmanned aerial vehicle (UAV)) or any other manned or unmanned aerial vehicle or system. For ease of description, the aircraft propulsion system 20 is described below as a turbofan propulsion system. The aircraft propulsion system 20 of the present disclosure, however, is not limited to such an exemplary propulsion system. The aircraft propulsion system 20, for example, may alternatively be configured as a turbojet propulsion system, a turboprop propulsion system, a turboshaft propulsion system, a propfan propulsion system, a pusher fan propulsion system, or any other type of ducted and/or open rotor propulsion system.

The aircraft propulsion system 20 includes a gas turbine engine 22 (e.g., a turbofan engine) housed within a stationary engine housing 24, which engine housing 24 of FIG. 1 includes an inner housing structure 26, an outer housing structure 28 and a guide vane structure 30 (e.g., a fan exit guide vane (FEGV) structure) extending radially between and connected to the inner housing structure 26 and the outer housing structure 28. The aircraft propulsion system 20 extends axially along an axis 32 between an axial forward, upstream end 34 of the aircraft propulsion system 20 and an axial aft, downstream end 36 of the aircraft propulsion system 20. Briefly, the propulsion system axis 32 may be a centerline axis of the aircraft propulsion system 20, the turbine engine 22 and/or one or more of its members. The propulsion system axis 32 may also or alternatively be a rotational axis for one or more members of the turbine engine 22.

The turbine engine 22 of FIG. 1 includes a propulsor section 38 (e.g., a fan section), a compressor section 39, a combustor section 40 and a turbine section 41. The compressor section 39 of FIG. 1 includes a low pressure compressor (LPC) section 39A and a high pressure compressor (HPC) section 39B. The turbine section 41 of FIG. 1 includes a high pressure turbine (HPT) section 41A and a low pressure turbine (LPT) section 41B. Here, at least (or only) the LPC section 39A, the HPC section 39B, the combustor section 40, the HPT section 41A and the LPT section 41B collectively form a core 44 of the turbine engine 22.

The engine sections 38-41B may be arranged sequentially along the propulsion system axis 32 within the engine housing 24. The propulsor section 38 includes a bladed propulsor rotor 46; e.g., a fan rotor. The LPC section 39A includes a bladed low pressure compressor (LPC) rotor 47. The HPC section 39B includes a bladed high pressure compressor (HPC) rotor 48. The HPT section 41A includes a bladed high pressure turbine (HPT) rotor 49. The LPT section 41B includes a bladed low pressure turbine (LPT) rotor 50. The propulsor rotor 46, the LPC rotor 47, the HPC rotor 48, the HPT rotor 49 and the LPT rotor 50 each include a rotor base (e.g., a disk or a hub) and a plurality of rotor blades (e.g., airfoils, rotor vanes, etc.). The rotor blades are arranged and may be equispaced circumferentially around the respective rotor base in one or more arrays. With this arrangement, the rotor blades may be arranged into one or more stages. Each of the rotor blades is connected to (e.g., formed integral with or otherwise attached to) the respective rotor base. Each of the rotor blades projects radially (e.g., spanwise) out from the respective rotor base to a distal tip of the respective rotor blade.

The HPC rotor 48 is coupled to and rotatable with the HPT rotor 49. The HPC rotor 48 of FIG. 1, for example, is connected to the HPT rotor 49 through a high speed shaft 52. At least (or only) the HPC rotor 48, the HPT rotor 49 and the high speed shaft 52 collectively form a high speed rotating structure 54A; e.g., a high speed spool of the engine core 44. This high speed rotating structure 54A of FIG. 1 and its members 48, 49 and 52 are rotatable about the propulsion system axis 32. However, it is contemplated the high speed rotating structure 54A may alternatively be rotatable about another axis radially and/or angularly offset from the rotational axis of the propulsor rotor 46 and/or the centerline axis of the turbine engine 22.

The LPC rotor 47 is coupled to and rotatable with the LPT rotor 50. The LPC rotor 47 of FIG. 1, for example, is connected to the LPT rotor 50 through a low speed shaft 56. At least (or only) the LPC rotor 47, the LPT rotor 50 and the low speed shaft 56 collectively form a low speed rotating structure 54B; e.g., a low speed spool of the engine core 44. This low speed rotating structure 54B is further coupled to the propulsor rotor 46 through a drivetrain 58. The drivetrain 58 may be configured as a geared drivetrain, where a geartrain 60 (e.g., a transmission, a speed change device, an epicyclic geartrain, etc.) is disposed between and operatively couples the propulsor rotor 46 to the low speed rotating structure 54B and its LPT rotor 50. With this arrangement, the propulsor rotor 46 may rotate at a different (e.g., slower) rotational speed than the low speed rotating structure 54B and its LPT rotor 50. Alternatively, the drivetrain 58 may be configured as a direct-drive drivetrain, where the geartrain 60 is omitted. With such an arrangement, the propulsor rotor 46 rotates at a common (the same) rotational speed as the low speed rotating structure 54B and its LPT rotor 50. The low speed rotating structure 54B of FIG. 1 and its members 47, 50 and 56 as well as the propulsor rotor 46 are rotatable about the propulsion system axis 32. However, it is contemplated the low speed rotating structure 54B may alternatively be rotatable about another axis radially and/or angularly offset from the rotational axis of the propulsor rotor 46 and/or the centerline axis of the turbine engine 22.

The inner housing structure 26 of FIG. 1 includes an inner case 62 (e.g., a core case) for the turbine engine 22, an inner nacelle structure 64 (sometimes referred to as an inner fixed structure (IFS)) and an internal inner housing compartment 66. The inner case 62 is disposed radially outboard of, extends axially along and may circumscribe one or more or all of the engine sections 39A-41B and the respective engine rotors 47-50. The inner case 62 may thereby house and provide a support structure for the respective engine sections 39A-41B and the respective engine rotors 47-50. The inner nacelle structure 64 is configured to provide an aerodynamic cover over the engine core 44 and its inner case 62. The inner housing compartment 66 of FIG. 1 is formed by and is disposed radially between the inner case 62 and an inner barrel of the inner nacelle structure 64. The inner housing structure 26 and its inner nacelle structure 64 may also form a radial inner peripheral boundary of a bypass flowpath 68 (e.g., an annular bypass flowpath) within the aircraft propulsion system 20.

The outer housing structure 28 of FIG. 1 includes an outer case 70 (e.g., a fan case) for the turbine engine 22, an outer nacelle structure 72 and an internal outer housing compartment 74. The outer case 70 is disposed radially outboard of, extends axially along and may circumscribe the propulsor section 38 and its propulsor rotor 46. The outer case 70 may thereby house and provide a containment structure for the propulsor section 38 and its propulsor rotor 46. The outer nacelle structure 72 is configured to provide an aerodynamic cover over the outer case 70. The outer housing compartment 74 of FIG. 1 is at least partially formed by and disposed radially between the outer case 70 and an outer portion (e.g., fan cowls) of the outer nacelle structure 72. The outer housing structure 28 and its outer nacelle structure 72 may also form a radial outer peripheral boundary of the bypass flowpath 68. With this arrangement, the outer housing structure 28 is spaced radially outboard from the inner housing structure 26. The outer housing structure 28 and its members 70 and/or 72 also extend axially along (e.g., axially overlap) and extend circumferentially about (e.g., circumscribe) the inner housing structure 26 and the engine core 44.

During operation, ambient air from outside of the aircraft may enter the aircraft propulsion system 20 of FIG. 1 and its turbine engine 22 through an airflow inlet 76. This air is directed across the propulsor section 38 and into a core flowpath 78 (e.g., an annular core flowpath) and the bypass flowpath 68. The core flowpath 78 of FIG. 1 extends sequentially through the LPC section 39A, the HPC section 39B, the combustor section 40, the HPT section 41A and the LPT section 41B from an airflow inlet 80 into the core flowpath 78 to a combustion products exhaust 82 out from the core flowpath 78 and the engine core 44. The air entering the core flowpath 78 may be referred to as "core air". The bypass flowpath 68 extends through a bypass duct, which bypass flowpath 68 and bypass duct bypass (e.g., are disposed radially outboard of and extend along) the engine core 44 and the inner housing structure 26. The air within the bypass flowpath 68 may be referred to as "bypass air".

The core air is compressed by the LPC rotor 47 and the HPC rotor 48 and is directed into a combustion chamber 84 (e.g., an annular combustion chamber) of a combustor 86 (e.g., an annular combustor) in the combustor section 40. Fuel is injected into the combustion chamber 84 by one or more fuel injectors 88 and mixed with the compressed core air to provide a fuel-air mixture. This fuel-air mixture is ignited and combustion products thereof flow through and sequentially drive rotation of the HPT rotor 49 and the LPT rotor 50 about the propulsion system axis 32. The rotation of the HPT rotor 49 and the LPT rotor 50 respectively drive rotation of the HPC rotor 48 and the LPC rotor 47 about the propulsion system axis 32 and, thus, compression of the air received from the core inlet 80. The rotation of the LPT rotor 50 of FIG. 1 also drives rotation of the propulsor rotor 46 about the propulsion system axis 32 through the drivetrain 58 and its geartrain 60. The rotation of the propulsor rotor 46 propels the bypass air through and out of the bypass flowpath 68. The propulsion of the bypass air may account for a majority of thrust generated by the turbine engine 22 of FIG. 1. Briefly, within the bypass flowpath 68, the guide vane structure 30 may condition (e.g., straighten out, de-swirl, etc.) the flow of bypass air propelled by the propulsor rotor 46 to enhance the forward thrust. The guide vane structure 30 may also structurally tie the inner housing structure 26 and its inner case 62 to the outer housing structure 28 and its outer case 70.

While the turbine engine 22 is described above with a particular two rotating structure arrangement, the present disclosure is not limited thereto. For example, the LPC rotor 47 may be omitted to configure the LPT rotor 50 as a power turbine (PT) rotor for the propulsor rotor 46. In another example, the turbine engine 22 may also include another rotating structure; e.g., an intermediate speed spool for the engine core 44.

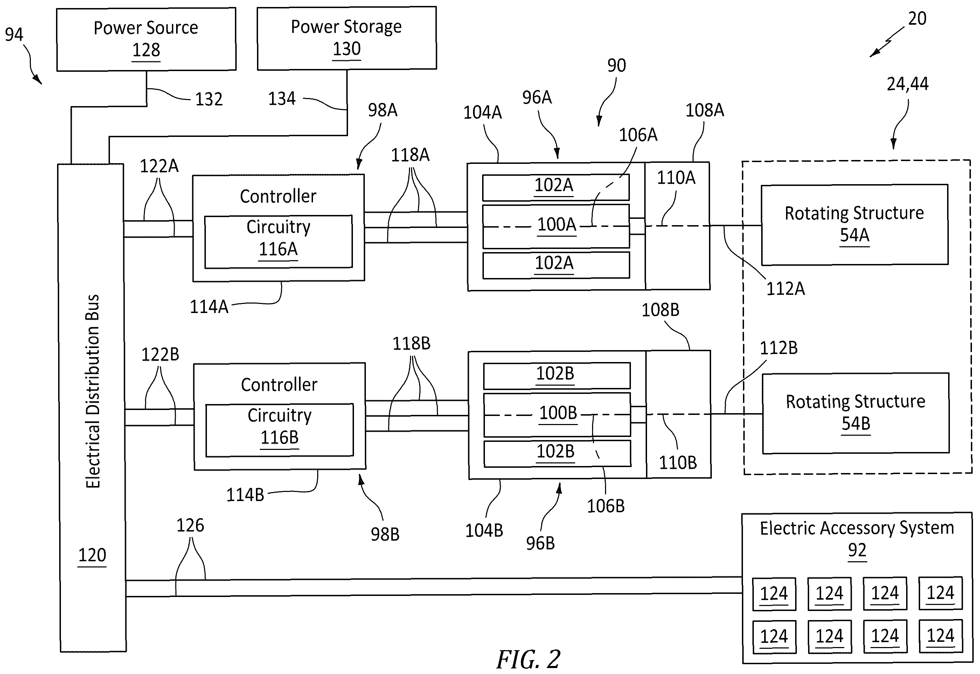

Referring to FIG. 2, the aircraft propulsion system 20 also includes an electric machine system 90 electrically coupled to an optional electric accessory system 92 and an electrical system 94 for the aircraft and its aircraft propulsion system 20. The electric machine system 90 of FIG. 2 includes one or more electric machines 96A and 96B (generally referred to as "96") and one or more electric machine (EM) controllers 98A and 98B (generally referred to as "98"). For ease of description, each electric machine 96 of FIG. 2 is described below as being electrically coupled to, controlled by and/or otherwise associated with a single, dedicated one of the EM controllers 98. However, it is contemplated a single EM controller may alternatively be electrically coupled to, may control and/or may otherwise be associated with multiple electric machines. It is also contemplated multiple EM controllers may be electrically coupled to, may control and/or may otherwise be associated with one or more common electric machines.

Each electric machine 96A, 96B of FIG. 2 includes an electric machine rotor 100A, 100B (generally referred to as "100"), an electric machine stator 102A, 102B (generally referred to as "102") and an electric machine housing 104A, 104B (generally referred to as "104"); e.g., a case. The machine rotor 100 is rotatable about a rotational axis 106A, 106B (generally referred to as "106") of the machine rotor 100A, 100B, which rotational axis 106A, 106B may also be an axial centerline of the electric machine 96A, 96B. The machine stator 102 of FIG. 2 is radially outboard of and circumscribes the machine rotor 100. With this arrangement, each electric machine 96 is configured as a radial flux electric machine. The electric machines 96 of the present disclosure, however, are not limited to such an exemplary rotor-stator configuration nor to radial flux arrangements. The machine rotor 100, for example, may alternatively be radially outboard of and circumscribe the machine stator 102. In another example, the machine rotor 100 may be axially next to the machine stator 102 configuring the respective electric machine 96 as an axial flux electric machine. Referring again to FIG. 2, the machine rotor 100 and the machine stator 102 are at least partially or completely housed within and interior of the machine housing 104.

Each electric machine 96A, 96B is operatively coupled to a respective one of the engine rotating structures 54A, 54B (generally referred to as "54") through a respective gearbox 108A, 108B (generally referred to as "108") for the aircraft propulsion system 20 and its turbine engine 22; e.g., an accessory gearbox. Briefly, these gearboxes 108A and 108B of FIG. 2 are operationally independent and physically discrete structures, where each gearbox 108A, 108B of FIG. 2 is uniquely associated with a respective one of the electric machines 96A, 96B and a respective one of the engine rotating structures 54A, 54B. Each machine rotor 100 of FIG. 2 is mechanically coupled to a respective gear system 110A, 110B (generally referred to as "110") in the respective gearbox 108A, 108B. This gearbox gear system 110A, 110B is mechanically coupled to the respective engine rotating structure 54A, 54B through a respective drivetrain 112A, 112B (generally referred to as "112"). This drivetrain 112 may be configured as or otherwise include a shaft, a tower shaft assembly, another gearbox (e.g., an angle gearbox), and/or the like.

Each electric machine 96 of FIG. 2 may be configurable as an electric motor and/or an electric generator; e.g., an electric motor-generator. For example, during a motor mode of operation, a respective one of the electric machines 96 may operate as the electric motor to convert electricity received from the aircraft electrical system 94 into mechanical power. The machine stator 102, for example, may generate an electromagnetic field with the machine rotor 100 using a current of electricity received from the aircraft electrical system 94 through the respective EM controller 98. This electromagnetic field may drive rotation of the machine rotor 100. The machine rotor 100, in turn, may provide mechanical power to and drive rotation of the respective engine rotating structure 54 through the respective gearbox 108 and the respective drivetrain 112. This mechanical power may be provided to boost power or completely power the rotation of the respective engine rotating structure 54. By contrast, during a generator mode of operation, the respective electric machine 96 may operate as the electric generator to convert mechanical power received from the respective engine rotating structure 54 into electricity. Rotation of the machine rotor 100, for example, may be rotationally driven by rotation of the respective engine rotating structure 54 through the respective drivetrain 112 and the respective gearbox 108. The rotation of the machine rotor 100 may generate an electromagnetic field with the machine stator 102, and the machine stator 102 may convert energy from the electromagnetic field into electricity. The respective electric machine 96 may then provide a current of electricity to the aircraft electrical system 94 through the respective EM controller 98 for storage and/or further use. The electric machines 96 of the present disclosure, however, are not limited to such exemplary operation. For example, one, some or all of the electric machines 96 may alternatively each be configured as a dedicated electric generator; e.g., without the electric motor functionality. In another example, one, some or all of the electric machines 96 may alternatively each be configured as a dedicated electric motor; e.g., without the electric generator functionality.

Each EM controller 98A, 98B includes a controller housing 114A, 114B (generally referred to as "114") and internal controller circuitry 116A, 116B (generally referred to as "116"). The controller housing 114 may be configured as an enclosed case (e.g., a closed or sealed container) for the respective controller circuitry 116. The controller circuitry 116 is disposed within an interior of the controller housing 114; e.g., an internal chamber or other volume(s) within and enclosed by the controller housing 114. The controller circuitry 116 includes various electrical components, connectors and the like. Examples of the electrical components include, but are not limited to, printed circuit board(s) (PCB(s)), electrical inductor(s), electrical inverter(s), electrical amplifier(s), electrical switch(es) (e.g., contactor(s), relay(s), etc.), processing device(s), memory module(s), communication module(s), electrical transformer(s), electrical rectifier(s), and/or the like.

Each EM controller 98A, 98B is electrically coupled to a respective one of the electric machines 96A, 96B through one or more electric cables 118A, 118B (generally referred to as "118"); e.g., high voltage electric cables, power feeder cables, etc. More particularly, the controller circuitry 116 of each EM controller 98 is electrically coupled to the respective electric machine 96 and its machine stator 102 through the respective electric cables 118. Similarly, each EM controller 98A, 98B is electrically coupled to an electrical distribution bus 120 of the aircraft electrical system 94 through one or more electric cables 122A, 122B (generally referred to as "122"); e.g., high voltage electric cables, power feeder cables, etc. More particularly, the controller circuitry 116 of each EM controller 98 is electrically coupled to the aircraft electrical system 94 and its electrical distribution bus 120 through the respective electric cables 122.

Each EM controller 98 and its controller circuitry 116 are configured to control operation of a respective one of the electric machines 96. For example, when operating as the electric motor, the respective EM controller 98 and its controller circuitry 116 are configured to regulate a flow of electricity from the aircraft electrical system 94 to the respective electric machine 96. This electricity flow regulation may include: (a) turning-on the flow of electricity from the aircraft electrical system 94 to the respective electric machine 96 (e.g., electrically coupling the respective electric machine 96 to the aircraft electrical system 94); (b) turning-off the flow of electricity from the aircraft electrical system 94 to the respective electric machine 96 (e.g., electrically decoupling the respective electric machine 96 from the aircraft electrical system 94); (c) moderating the flow of electricity from the aircraft electrical system 94 to the respective electric machine 96. Here, the respective EM controller 98 operates as a motor controller. In another example, when operating as the electric generator, the respective EM controller 98 and its controller circuitry 116 are configured to regulate a flow of electricity from the respective electric machine 96 to the aircraft electrical system 94. This electricity flow regulation may include: (a) turning-on the flow of electricity from the respective electric machine 96 to the aircraft electrical system 94 (e.g., electrically coupling the respective electric machine 96 to the aircraft electrical system 94); (b) turning-off the flow of electricity from the respective electric machine 96 to the aircraft electrical system 94 (e.g., electrically decoupling the respective electric machine 96 from the aircraft electrical system 94); (c) moderating the flow of electricity from the respective electric machine 96 to the aircraft electrical system 94. Here, the respective EM controller 98 operates as a generator controller.

The electric accessory system 92 includes one or more electric devices 124. The electric devices 124 may include one or more electric actuators, one or more electric pumps, one or more electric valves and/or one or more fluid separator(s) (e.g., de-oiler(s)). The electric actuator(s) may include one or more electric linear actuators and/or one or more electric rotary actuators. The electric pump(s) may include one or more electric liquid pumps and/or one or more electric gas pumps (e.g., electric air compressor(s)). The electric devices 124 of FIG. 2 may be configured as part of one or more sub-systems for the aircraft propulsion system 20 and its turbine engine 22. Examples of these sub-systems include, but are not limited to: a fuel system for delivering the fuel to the fuel injectors 88 (see FIG. 1); a lubrication system for delivering lubricant (e.g., oil) to one or more lubricated components (e.g., bearing(s), gear system(s), seal system(s), etc.) of the aircraft propulsion system 20 and its turbine engine 22; a cooling system for delivering coolant (e.g., liquid coolant, air, etc.) to one or more fluid cooled components of the aircraft propulsion system 20 and its turbine engine 22; and an actuation system for moving one or more adjustable components (e.g., variable guide vanes, a variable area nozzle, etc.) of the aircraft propulsion system 20 and its turbine engine 22. One, some or all of these sub-systems may be discrete (e.g., operationally, mechanically, fluidly, etc. independent) from one another. Alternatively, some of the sub-systems may be integrated to share, for example, a common working fluid such as the lubricant or the fuel. The present disclosure, however, is not limited to the foregoing exemplary electric devices or sub-systems which may include those electric devices.

Each electric device 124 is electrically coupled to the electrical distribution bus 120 of the aircraft electrical system 94 through one or more electric cables 126 (collectively schematically shown); e.g., high voltage electric cables, low voltage electric cables, power feeder cables, etc. Each electric device 124 may thereby receive a current of electricity from the aircraft electrical system 94 to power operation thereof.

The aircraft electrical system 94 includes the electrical distribution bus 120. This aircraft electrical system 94 may also include a power source 128 and/or a power storage 130. The electrical distribution bus 120 is electrically coupled to each of the electric machines 96 through their respective EM controllers 98. The electrical distribution bus 120 is electrically coupled to each of the electric devices 124. The electrical distribution bus 120 is also electrically coupled to the power source 128 and the power storage 130, schematically shown via 132 and 134 respectively. With this arrangement, the electrical distribution bus 120 provides an intermediate connection between the various electrical aircraft propulsion system members 96A (via 98A), 96B (via 98B), 124, 128 and/or 130. The power source 128 may be an electric generator powered by the turbine engine 22 or an electric generator powered by another aircraft powerplant; e.g., an engine of a companion aircraft propulsion system, an engine of an auxiliary power unit (APU), a fuel cell system, etc. The power storage 130 is configured to receive electricity from the electrical distribution bus 120 for storage. The power storage 130 is also configured to provide the stored electricity to the electrical distribution bus 120. The power storage 130, for example, may be configured as or otherwise include one or more electricity storage devices; e.g., batteries, super capacitors, etc. With the foregoing aircraft electrical system arrangement, the electrical current provided to one, some or all of the electric devices 124 may be received, through the electrical distribution bus 120, from any one, some or all of the electrical aircraft propulsion system members 96A, 96B, 128 and/or 130. It is also contemplated the electrical current provided to one of the electric machines 96 may be received from another one of the electric machines 96 through the aircraft electrical system 94 and its electrical distribution bus 120.

As described above, each electric machine 96 of FIG. 2 is operatively coupled to the respective engine rotating structure 54 through a respective one of the gearboxes 108 (e.g., accessory gearboxes). With this configuration, each electric machine-gearbox arrangement may be located with the aircraft propulsion system 20 independent of a location of another electric machine-gearbox arrangement. This flexibility in locating the machine-gearbox arrangements may facilitate placement of one or more of the machine-gearbox arrangement(s) in otherwise unoccupied space(s) of the aircraft propulsion system 20. The flexibility in locating the machine-gearbox arrangements may also or alternatively facilitate placement of one or more of the machine-gearbox arrangement(s) in location(s) which reduce an overall size of the aircraft propulsion system 20; e.g., reduce an overall size of the outer housing structure 28 of FIG. 1, shift aero-lines of the outer nacelle structure 72 of FIG. 1 radially inward towards the propulsion system axis 32, etc. By reducing propulsion system size, aerodynamic drag along the aircraft propulsion system 20 may be reduced and an overall propulsion system efficiency may be increased.

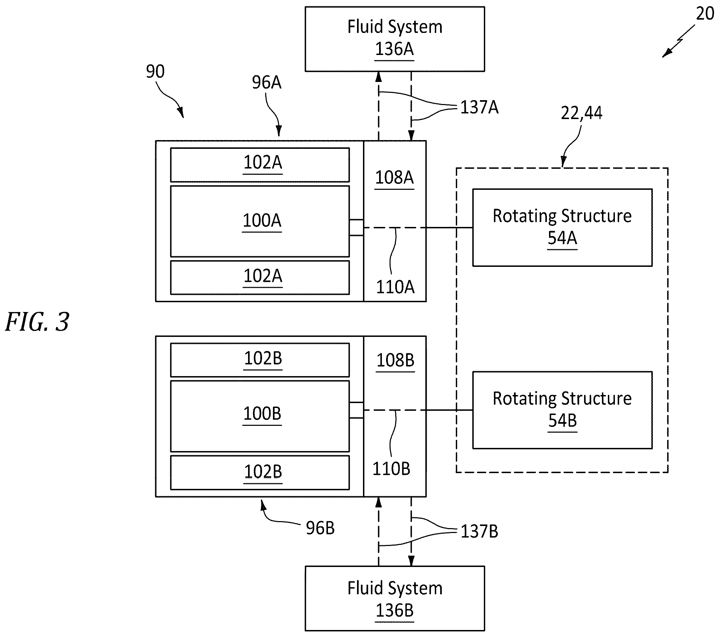

Referring to FIG. 3, each gearbox 108A, 108B may be serviced by a separate fluid system 136A, 136B (generally referred to as "136"); e.g., a lubrication and/or cooling system. Each gearbox 108A, 108B of FIG. 3, for example, is fluidly coupled with a respective one of the fluid systems 136A, 136B through a respective fluid circuit 137A, 137B (generally referred to as "137"). The fluid systems 136 of FIG. 3 and their fluid circuits 137 are fluidly independent (e.g., isolated, decoupled, etc.) from one another. Here, each fluid system 136 is configured to circulate a fluid (e.g., lubricant and/or coolant) through the respective fluid circuit 137 and the respective gearbox 108 to service (e.g., lubricant and/or cool) that gearbox 108. By providing the gearboxes 108 of FIG. 3 with separate fluid systems 136, the fluid flowing through one of the gearboxes 108 may not also or later flow through another gearbox 108. Thus, in an unlikely event of a failure in the first gearbox gear system 110A for example, contamination (e.g., debris, etc.) from that failed first gearbox 108A will not affect operation of the second gearbox 108B and its second gearbox gear system 110B, and vice versa. Thus, a failure or reduction in efficiency in one of the gearboxes (e.g., 108A, 108B) may not affect operation of the electric machine (e.g., 96B, 96A) associated with the other one of the gearboxes (e.g., 108B, 108A).

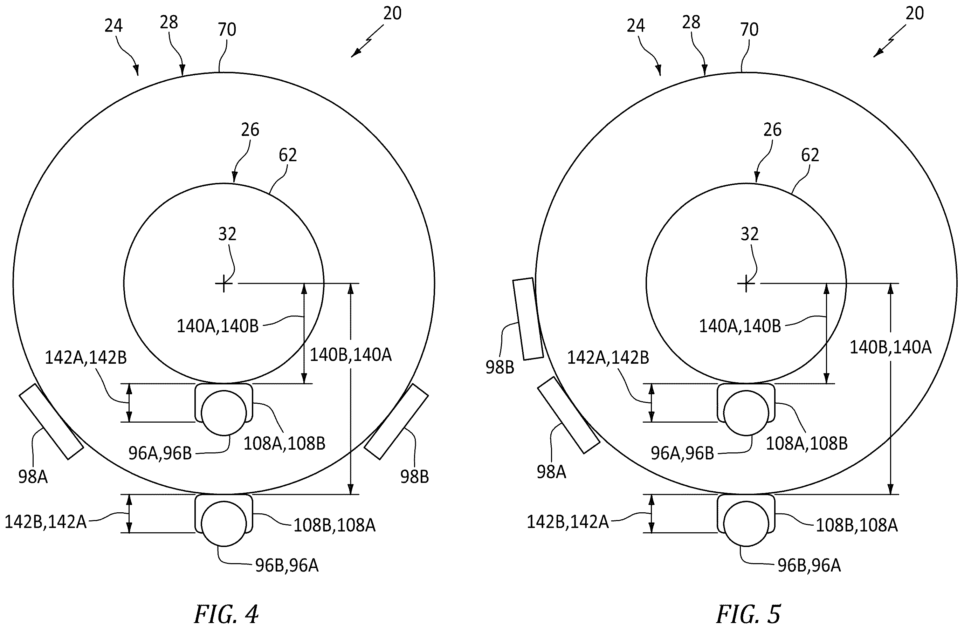

Referring to FIGS. 4-7, one of the gearboxes 108A, 108B may be mounted and/or otherwise arranged with the inner housing structure 26 and its inner case 62, and another one of the gearboxes 108B, 108A may be mounted and/or otherwise arranged with the outer housing structure 28 and its outer case 70. The gearbox 108A, 108B mounted to / arranged with the inner housing structure 26 is thereby located remote from the outer housing structure 28 and the other gearbox 108B, 108A. Similarly, the gearbox 108B, 108A mounted to / arranged with the outer housing structure 28 is located remote from the inner housing structure 26 and the other gearbox 108A, 108B. For ease of description, the first gearbox 108A is described below as being mounted with the inner housing structure 26 and its inner case 62, and the second gearbox 108B is described below as being mounted with the outer housing structure 28 and its outer case 70. With this arrangement, the first gearbox 108A is disposed in closer proximity to the respective engine rotating structure (e.g., the high speed rotating structure 54A of FIG. 2) and, thus, decreases losses associated with transferring mechanical power through the respective drivetrain 112A of FIG. 2. By contrast, the second gearbox 108B is disposed in a relatively cool portion of the aircraft propulsion system 20 and remote from the relatively hot engine core 44 (see FIG. 1). The present disclosure, however, is not limited to such an exemplary arrangement. For example, the second gearbox 108B may alternatively be mounted with the inner housing structure 26 and its inner case 62, and the first gearbox 108A may alternatively be mounted with the outer housing structure 28 and its outer case 70.

Referring still to FIGS. 4-7, the first gearbox 108A (here, the gearbox arranged with the inner housing structure 26) may be disposed radially outboard of the inner case 62, for example within the inner housing compartment 66 (see FIG. 1). This first gearbox 108A may be mounted (e.g., mechanically fastened) directly or indirectly to the inner case 62. The first gearbox 108A may thereby also indirectly mount the first electric machine 96A to the inner case 62, where that first electric machine 96A may also be disposed radially outboard of the inner case 62 and within the inner housing compartment 66 (see FIG. 1). Of course, it is contemplated the first electric machine 96A may also be otherwise attached to the inner housing structure 26 and its inner case 62; e.g., by a support (e.g., a strut, a frame, etc.) independent of the first gearbox 108A.

The second gearbox 108B (here, the gearbox arranged with the outer housing structure 28) may be disposed radially outboard of the outer case 70, for example within the outer housing compartment 74 (see FIG. 1). This second gearbox 108B may be mounted (e.g., mechanically fastened) directly or indirectly to the outer case 70. The second gearbox 108B may thereby also indirectly mount the second electric machine 96B to the outer case 70, where that second electric machine 96B may also be disposed radially outboard of the outer case 70 and within the outer housing compartment 74 (see FIG. 1). Of course, it is contemplated the second electric machine 96B may also be otherwise attached to the outer housing structure 28 and its outer case 70; e.g., by a support (e.g., a strut, a frame, etc.) independent of the second gearbox 108B.

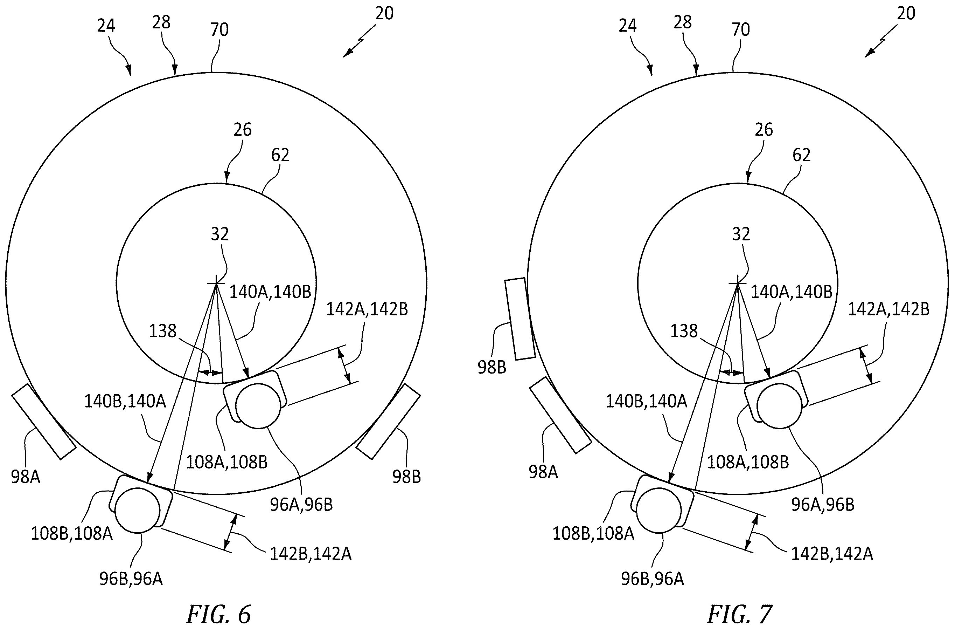

Referring to FIGS. 4 and 5, the first gearbox 108A may be circumferentially aligned with the second gearbox 108B about the propulsion system axis 32. Alternatively, referring to FIGS. 6 and 7, the first gearbox 108A may be circumferentially offset from the second gearbox 108B about the propulsion system axis 32. The first gearbox 108A of FIGS. 6 and 7, for example, is circumferentially spaced from the second gearbox 108B by an inter-gearbox offset angle 138. This inter-gearbox offset angle 138 may be a non-zero acute angle as shown in FIGS. 6 and 7. Alternatively, it is contemplated the inter-gearbox offset angle 138 may be a right angle or even an obtuse angle as large as one-hundred and eighty degrees (180°) such that the gearboxes 108 may be diametrically opposite one another.

Referring to FIGS. 4-7, each gearbox 108A, 108B is disposed a radial distance 140A, 140B (generally referred to as "140") from the propulsion system axis 32. The first radial distance 140A between the first gearbox 108A and the propulsion system axis 32 is sized different than the second radial distance 140B between the second gearbox 108B and the propulsion system axis 32. For example, where the first gearbox 108A is mounted to / arranged with the inner housing structure 26 and the second gearbox 108B is mounted to / arranged with outer housing structure 28 as described above, the first radial distance 140A is smaller than the second radial distance 140B. A difference between the first and the second radial distances 140A and 140B may be equal to or greater than a first dimension 142A (e.g., a radial height) of the first gearbox 108A and/or a second dimension 142B (e.g., a radial height) of the second gearbox 108B. The present disclosure, however, is not limited to such an exemplary dimensional relationship as the radial distances 140 may change depending upon an overall size of the aircraft propulsion system 20.

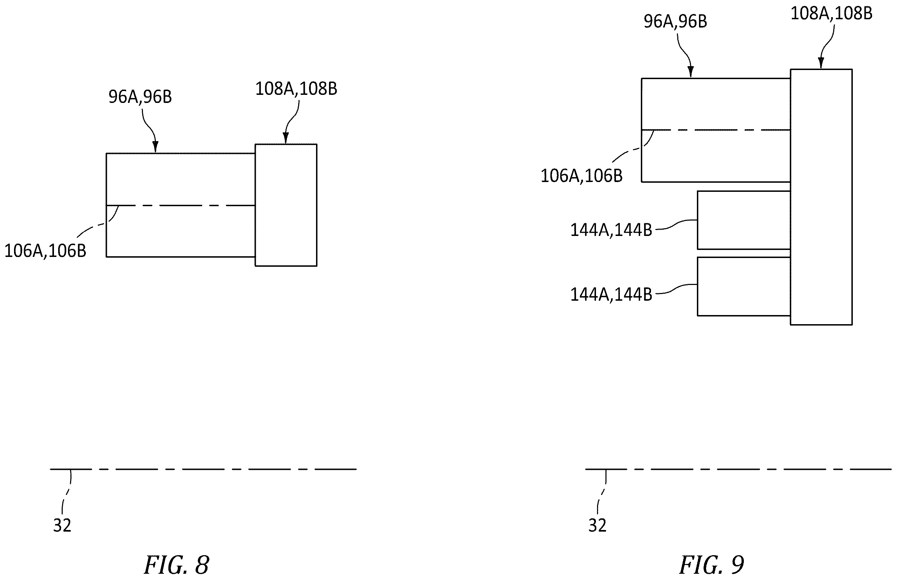

In some embodiments, referring to FIGS. 8 and 9, each electric machine 96 may be located axially next to (e.g., adjacent, abutted against, etc.) the respective gearbox 108 along the propulsion system axis 32. Here, each electric machine 96 may be disposed axially forward of the respective gearbox 108 or axially aft of the respective gearbox 108. The rotational axis 106 of each machine rotor 100 (see FIG. 2) may thereby be arranged parallel to the propulsion system axis 32, or at least within +/- five or ten degrees (5°, 10°) of parallel to the propulsion system axis 32. In select other embodiments, however, it is contemplated the rotational axis 106 of one or each machine rotor 100 (see FIG. 2) may alternatively be angularly offset from the propulsion system axis 32 by an offset angle greater than ten degrees (10°).

In some embodiments, referring to FIG. 8, a respective one of the electric machines 96A, 96B may be the only external component mounted to and operatively coupled to the respective gearbox 108A, 108B. Each gearbox 108A, 108B may thereby be dedicated to the respective electric machine 96A, 96B and, more particularly, dedicated to transferring mechanical power between the respective electric machine 96A, 96B and the respective rotating structure 54A, 54B (see FIG. 2). In other embodiments, referring to FIG. 9, one or more engine accessories 144A, 144B (generally referred to as "144") may also be operationally coupled to a respective one of the gearboxes 108A, 108B. This gearbox 108A, 108B may thereby operationally couple and transfer mechanical power between each respective member 96A and 144A, 96B and 144B and the respective rotating structure 54A, 54B (see FIG. 2). Examples of the engine accessories 144 include, but are not limited to, pump(s), fluid separator(s), electric generator(s) and electric motor(s).

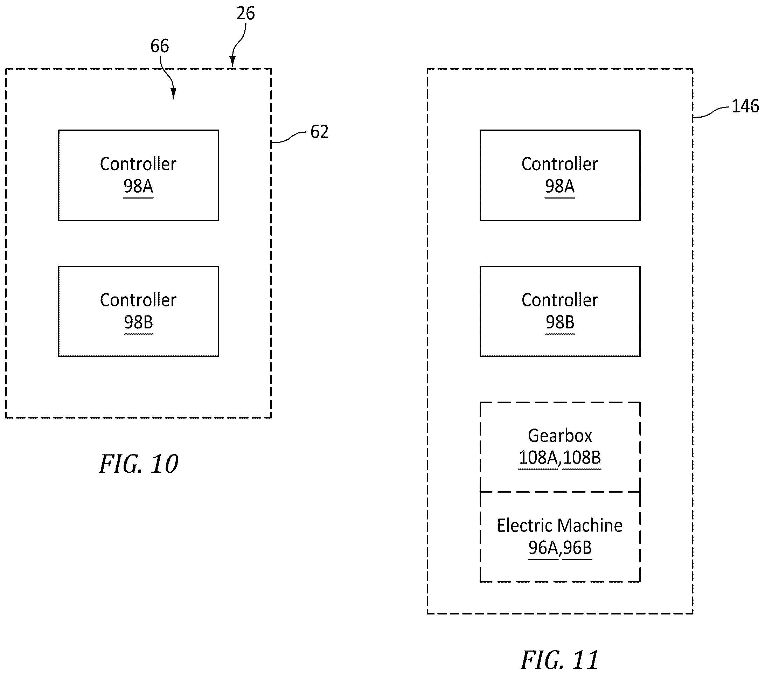

In some embodiments, referring to FIGS. 4-7, each EM controller 98 may be mounted to and/or otherwise arranged with the outer housing structure 28 and its outer case 70. Each EM controller 98 of FIGS. 4-7, for example, is disposed radially outboard of the outer case 70 within the outer housing compartment 74 (see FIG. 1). Each EM controller 98 is mounted (e.g., mechanically fastened) directly or indirectly to the outer case 70. In FIGS. 4 and 6, one or more of the gearboxes 108 and the associated electric machines 96 are positioned circumferentially between the EM controllers 98A and 98B about the propulsion system axis 32. In FIGS. 5 and 7, one or more of the gearboxes 108 and the associated electric machines 96 are positioned circumferentially to a common side of the EM controllers 98A and 98B. With the foregoing configurations, each EM controller 98 of FIGS. 4-7 may be disposed in a relatively cool portion of the aircraft propulsion system 20 and remote from the relatively hot engine core 44 (see FIG. 1). The present disclosure, however, is not limited to such exemplary arrangements. For example, referring to FIG. 10, any one, some or all of the EM controllers 98 may alternatively each be arranged in the inner housing compartment 66 with the inner housing structure 26 and its inner case 62. In another example, referring to FIG. 11, any one, some or all of the EM controllers 98 may still alternatively each be arranged remote from the aircraft propulsion system 20 and its turbine engine 22 (see FIG. 1) with an airframe structure 146; e.g., a pylon structure of the aircraft propulsion system 20, an aircraft wing, an aircraft fuselage, or the like. Moreover, it is also contemplated any single one of the gearboxes 108 and its associated electric machine 96 may also or alternatively be arranged remote from the aircraft propulsion system 20 and its turbine engine 22 (see FIG. 1) with the airframe structure 146, or another airframe structure.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly (20) for an aircraft, comprising:
a propulsor rotor (46);
a turbine engine core (44) configured to drive rotation of the propulsor rotor (46) about an axis (32), the turbine engine core (44) including a first rotating structure (54A) and a second rotating structure (54B), the first rotating structure (54A) comprising a first bladed rotor (48; 49), and the second rotating structure (54B) comprising a second bladed rotor (47; 50);
an inner case (62) housing the turbine engine core (44);
a first gearbox (108A) mounted with the inner case (62);
a second gearbox (108B) located remote from the inner case (62);
a first electric machine (96A) operatively coupled to the first rotating structure (54A) through the first gearbox (108A); and
a second electric machine (96B) operatively coupled to the second rotating structure (54B) through the second gearbox (108B);
wherein at least one of:
the first electric machine (96A) is configurable as a first electric motor during a first motor mode of operation, and the first electric machine (96A) is configurable as a first electric generator during a first generator mode of operation; or
the second electric machine (96B) is configurable as a second electric motor during a second motor mode of operation, and the second electric machine (96BB) is configurable as a second electric generator during a second generator mode of operation.

2. The assembly of claim 1, further comprising:
an outer case (70) housing the propulsor rotor (46) and extending circumferentially about the inner case (62);
the second gearbox (108B) mounted with the outer case (70).

3. The assembly of claim 2, further comprising:
a first electric machine controller (98A) configured to control operation of the first electric machine (96A), the first electric machine controller (98A) mounted with the outer case (70); and
a second electric machine controller (98B) configured to control operation of the second electric machine (96B), the second electric machine controller (98B) mounted with the outer case (70).

4. The assembly of claim 2, further comprising:
a first electric machine controller (98A) configured to control operation of the first electric machine (96A), the first electric machine controller (98A) arranged within an inner compartment (66) bordered by the inner case (62); and
a second electric machine controller (98B) configured to control operation of the second electric machine (96B), the second electric machine controller (98B) arranged within an outer compartment (74) bordered by the outer case (70).

5. The assembly of any preceding claim, wherein the first gearbox (108A) is circumferentially offset from the second gearbox (108B) about the axis (32).

6. The assembly of any of claims 1 to 4, wherein the first gearbox (108A) is circumferentially aligned with the second gearbox (108B) about the axis (32).

7. The assembly of any preceding claim, further comprising:
a first fluid system (136A) configured to lubricate and/or cool the first gearbox (108A); and
a second fluid system (136B) configured to lubricate and/or cool the second gearbox (108B).

8. The assembly of any preceding claim, wherein:
the turbine engine core (44) further includes a compressor section (39), a combustor section (40), a turbine section (41) and a flowpath (78) extending through the compressor section (39), the combustor section (40) and the turbine section (41) from an inlet (80) into the flowpath (78) to an exhaust (82) from the flowpath (78);
the first bladed rotor (49) is a first turbine rotor (49) within the turbine section (41);
the second bladed rotor (50) is a second turbine rotor (50) within the turbine section (41); and
the first turbine rotor (49) is located between the combustor section (40) and the second turbine rotor (50) along the flowpath (78).

9. The assembly of any of claims 1 to 7, wherein:
the turbine engine core (44) further includes a compressor section (39), a combustor section (40), a turbine section (41) and a flowpath (78) extending through the compressor section (39), the combustor section (40) and the turbine section (41) from an inlet (80) into the flowpath (78) to an exhaust (82) from the flowpath (78);
the first bladed rotor (50) is a first turbine rotor (50) within the turbine section (41);
the second bladed rotor (49) is a second turbine rotor (49) within the turbine section (41); and
the second turbine rotor (49) is located between the combustor section (40) and the first turbine rotor (50) along the flowpath (78).

10. The assembly of any preceding claim, wherein at least one of:
the first gearbox (108A) is dedicated to transferring mechanical power between the first electric machine (96A) and the first rotating structure (54A); or
the second gearbox (108B) is dedicated to transferring mechanical power between the second electric machine (96B) and the second rotating structure (54B).

11. The assembly of any preceding claim, further comprising at least one of:
a first accessory (144A) operatively coupled to the first rotating structure (54A) through the first gearbox (108A); or
a second accessory (144B) operatively coupled to the second rotating structure (54B) through the second gearbox (108B).

12. The assembly of any preceding claim, further comprising an electrical system (94) electrically coupled to the first electric machine (96A) and the second electric machine (96B).

13. The assembly of claim 12, further comprising an or the outer case (70) housing the propulsor rotor (46) and circumscribing the inner case (62), and at least one of:
a or the first electric machine controller (98A) electrically coupled between the first electric machine (96A) and the electrical system (94), the first electric machine controller (98A) mounted with the outer case (70); or
a second electric machine controller (98B) electrically coupled between the second electric machine (96B) and the electrical system (94), the second electric machine controller (98B) mounted with the outer case (70).

14. An assembly (20) for an aircraft, comprising:
a propulsor rotor (46);
a turbine engine core (44) configured to drive rotation of the propulsor rotor (46) about an axis (32), the turbine engine core (44) including a first rotating structure (54A) and a second rotating structure (54B), the first rotating structure (54A) comprising a first bladed rotor (48; 49), and the second rotating structure (54B) comprising a second bladed rotor (47; 50);
an inner housing structure (26) housing the turbine engine core (44);
an outer housing structure (28) housing the propulsor rotor (46) and located radially outboard of the inner housing structure (26);
a first gearbox (108A) located remote from the outer housing structure (28);
a second gearbox (108B) mounted with the outer housing structure (28);
a first electric machine (96A) operatively coupled to the first rotating structure (54A) through the first gearbox (108A); and
a second electric machine (96B) operatively coupled to the second rotating structure (54B) through the second gearbox (108B);
wherein at least one:
the first electric machine (96A) is configurable as a first electric motor during a first motor mode of operation, and the first electric machine (96A) is configurable as a first electric generator during a first generator mode of operation; or
the second electric machine (96B) is configurable as a second electric motor during a second motor mode of operation, and the second electric machine (96B) is
configurable as a second electric generator during a second generator mode of operation, optionally, wherein the first gearbox (108A) is mounted with the inner housing structure (26).

15. An assembly (20) for an aircraft, comprising:
a propulsor rotor (46);
a turbine engine core (44) configured to drive rotation of the propulsor rotor (46) about an axis (32), the turbine engine core (44) including a first rotating structure (54A) and a second rotating structure (54B), the first rotating structure (54A) comprising a first bladed rotor (48; 49), and the second rotating structure (54B) comprising a second bladed rotor (47; 50);
a first gearbox (108A) located a first radial distance (140A) from the axis (32);
a second gearbox (108B) located a second radial distance (140B) from the axis (32) that is different than the first radial distance (140A);
a first electric machine (96A) comprising a first electric machine rotor (100A), the first gearbox (108A) configured to transfer mechanical power between the first electric machine rotor (100A) and the first rotating structure (54A); and
a second electric machine (96B) comprising a second electric machine rotor (100B), the second gearbox (108B) configured to transfer mechanical power between the second electric machine rotor (100B) and the second rotating structure (54B);
wherein at least one of the first electric machine (96A) or the second electric machine (96B) is configured as an electric motor-generator,
optionally, wherein one or more of:
the assembly (20) further comprises a housing structure (26) housing and extending circumferentially about the turbine engine core (44) , wherein the first gearbox (108A) is disposed within a compartment (66) of the housing structure (26) located radially outboard of the turbine engine core (44);
the assembly further comprises a housing structure (28) housing and extending circumferentially about the propulsor rotor (46), wherein the second gearbox (108B) is disposed within a compartment (74) of the housing structure (28) located radially outboard of the propulsor rotor (46);
a difference between the first radial distance (140A) and the second radial distance (140B) is greater than at least one of a radial height (142A) of the first gearbox (108A) or a radial height (142B) of the second gearbox (108B); or
wherein at least one of the first gearbox (108A) is dedicated to transferring the mechanical power between the first electric machine rotor (100A) and the first rotating structure (54A) or the second gearbox (108B) is dedicated to transferring the mechanical power between the second electric machine rotor (100B) and the second rotating structure (54B).
